# EUROPEAN PATENT APPLICATION

(11) **EP 3 400 809 A1**
(43) Date of publication of application: **14.11.2018**
(21) Application number: 18169838.2
(22) Date of filing: 27.04.2018
(51) Int. Cl.: A23D 7/00, A23D 7/005, A23D 7/02, A23L 35/00, B01F 7/00, B01F 7/16, B01F 3/10

(54) **METHOD OF PRODUCING MAYONNAISE**

(30) Priority: 09.05.2017 EP 17170069
(71) Applicant: Tetra Laval Holdings & Finance S.A., 1009 Pully (CH)
(72) Inventor: Brintje, Ulrika, 216 19 Malmö (SE); Arlov, Dragana, 215 85 Malmö (SE); Innings, Fredrik, 24745 Torna Hällestad (SE); Mortensen, Hans Henrik, DK-9400 Noerresundby (DK)
(74) Representative: Tetra Pak - Patent Attorneys SE

(57) **Abstract**

A method for producing mayonnaise in a mixer unit, the method comprising: introducing (102) water and egg ingredient into the mixer unit; mixing (104), at a first operational speed (ω1), the water and the egg ingredient into a premix; introducing (106) vegetable oil to such an amount that a final fat content of the produced mayonnaise is 65-85 wt%, mixing (108), at a second operational speed (ω2), the premix and the vegetable oil into a pre-emulsion, mixing (112), at a third operational speed (ω3), the pre-emulsion to thereby obtain mayonnaise, and introducing (110), at any stage, an acidic ingredient to be mixed into the mayonnaise.

## Description

### Technical Field

The invention relates to a method for producing mayonnaise in a mixer unit.

### Background Art

Mayonnaise is a stable emulsion of, generally, vegetable oil, egg yolk and either vinegar or lemon juice. It is consumed by humans as a cold condiment sauce and has many options for embellishment with various herbs and spices. Other ingredients may be included, such as stabilizers.

Mayonnaise is often used as spreads on sandwiches and burgers, as the creamy base in cold salads, as dip for French fries and much more. For each mayonnaise application, consumer preferences for taste, texture and appearance vary considerably and are highly dependent on country and region, with traditions in some cases extending back more than 200 years. Also, in many countries there are regulations that stipulate which ingredients must be included in order to be able to sell a product under the name "mayonnaise".

As a result, there are numerous mayonnaise variants in production. When taking the range of national, regional and even local codes for naming, labelling and ingredient preference into account, and throw in ever-changing consumer trends, the challenge of providing efficient mayonnaise production becomes obvious. Being able to accurately predict and control the required parameters for producing the desired mayonnaise of right quality is of utmost importance, as this allows optimization of production costs, trouble free production scale-up and, not least, rapid development and shorter time-to-market for new mayonnaise products.

Factors that need to be taken into account include predicting the emulsion of the mayonnaise and its droplet-size, as these parameters to a great extent affects texture and appearance. These parameters are influenced not only by ingredient types and composition, but also by the production method, the type of equipment used and the scale of production.

Several prior art techniques for producing mayonnaise exist. However, there is a need for an improved method that optimizes mayonnaise production, where specialized equipment can be used to efficiently produce different kinds of mayonnaise.

### Summary

It is an object of the invention to at least partly improve prior art techniques for producing mayonnaise. In particular, it is an object to provide a mayonnaise production method where different types of mayonnaises are efficiently emulsified, uniform droplet size is provided, overshear (breaking) of the emulsion is avoided while the total energy consumption for producing the mayonnaise is decreased.

Thus, a method is provided for producing mayonnaise in a mixer unit. The method comprises: introducing water and egg ingredient into the mixer unit; mixing, at a first operational speed of the mixer unit, the water and the egg ingredient into a premix; introducing vegetable oil into the mixer unit, to such an amount that a final fat content of the produced mayonnaise is 65-85 wt%; mixing, at a second operational speed of the mixer unit, the premix and the vegetable oil into a pre-emulsion; and mixing, at a third operational speed of the mixer unit, the pre-emulsion to thereby obtain mayonnaise. At any stage before the the mayonnaise is obtained, an acidic ingredient is introduced into the mixer unit so that the acidic ingredient will be mixed into the obtained mayonnaise.

The acidic ingredient may thus be introduced e.g. together with the water and egg ingredient, with the vegetable oil or at any other time during the production of the mayonnaise, as long as there is sufficient mixing time left to properly mix it with the other ingredients.

The egg ingredient may have the form of liquid egg yolks, dried egg yolks, the liquid part of whole eggs and the dried liquid parts of whole eggs or any combination thereof. The first, second and third operational speeds indicate a respective speed by which the mixer unit may be set to mix the ingredients that have been introduced into the mixer. The ingredients include at least the water, the egg ingredient, the vegetable oil and the acidic ingredient. The first and the second operational speeds may have the same values, i.e. they may be equal. The third operational speed is advantageously higher than the second operational speed.

Mixing into the pre-emulsion denotes a state where the vegetable oil, water and egg ingredient has formed an emulsion. However, the final mayonnaise product is not yet obtained, but mixing is continued at the third operational speed until the final mayonnaise is obtained (produced). The introduction of vegetable oil may be done during the mixing at both the first and the second operational speeds, until the final fat content of the produced mayonnaise is obtained.

Generally, the mixing steps at the operational speeds are performed sequentially without any stops in between. The introduction of the water, the egg ingredient, the vegetable oil and the acidic ingredient may typically be performed while the mixing is ongoing.

The method is advantageous in particular in that only one mixer unit is used for producing the mayonnaise. This may save energy, in particular compared to prior art where e.g. premixing of the water and egg ingredient is done in a separate vessel. Another advantage with the method is that it may be used to produce many different kinds of mayonnaise.

Other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a schematic view of a mixer unit for producing mayonnaise, and
Fig. 2 is a flow chart of a method of producing mayonnaise.

### Detailed Description

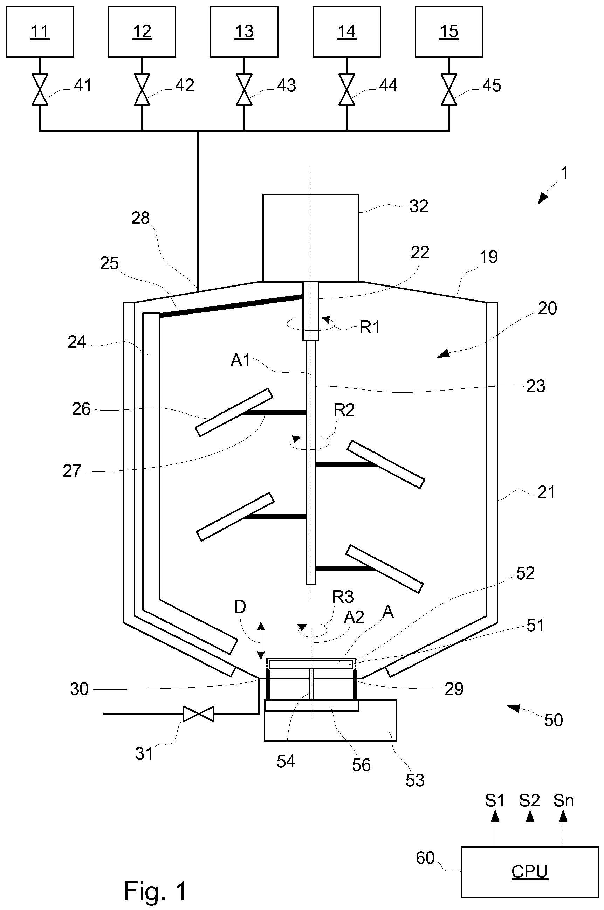

With reference to Fig. 1 a mixer unit 1 is illustrated. The mixer unit 1 comprises a tank 19 that has an inlet 28 for receiving various ingredients, such as water 11, egg ingredient 12, vegetable oil 13, acidic ingredient 14 and various other species and ingredients including stabilizer ingredients 15 that shall, when properly mixed, form mayonnaise. A number of sources that hold the ingredients that shall form the mayonnaise are connected to the inlet 28 via valves 41-45 that control the supply of the ingredients through the inlet 28 and into the tank 19. The mixer unit 1 has at its bottom 29 an outlet 30 through which mixed ingredients may leave tank 19, for example by opening an outlet valve 31. To facilitate introducing ingredients into the mixer unit 1, the mixer unit 1 may comprise a pressure arrangement (not shown) that inside the tank 19 creates a pressure that is lower than a pressure of the atmosphere surrounding the tank 19. To make mixed ingredients, or typically a finished product, efficiently leave the mixer unit 1, the pressure arrangement may inside the tank 19 create a pressure that is higher than a pressure of the atmosphere surrounding the tank 19. Additionally or alternatively, one or more pumps may be arranged for feeding the ingredients into the tank 19 respectively for drawing out a content of the tank 19, such as a finished mayonnaise product.

A cooling jacket 21 surrounds a periphery of the tank 19 and has an inlet respectively an outlet (not shown) for allowing a cooling media to flow through the cooling jacket 21 to thereby cool alternately to maintain a temperature of ingredients that are present inside the tank 19.

A double shaft agitator 20 is located inside the mixer unit 1 and has a double shaft axle 22, 23 that is suspended from the top of the tank 19. The double shaft axle has a first axle 22 that encloses an upper part of a second axle 23, and the two axles 22, 23 are driven to rotate in same or different directions R1, R2 by a motor unit 32 that is arranged at the top of the mixer unit 1. The two axles 22, 23 extend along and are rotatable about a first rotational axis A1 of the mixer unit 1.

A fist blade 24 is via an arm 25 connected to the first axle 22 so that the first blade 24 rotates in the same direction R1 as the first axle 22 when driven by the motor unit 32. The first blade 24 may be a scraper blade that rotates close to an inner wall of the tank 19, so that ingredients that stick to the inner tank wall may be scraped off.

A second blade 26 is via an arm 27 connected to the second axle 23 so that the second blade 26 rotates in the same direction R2 as the second axle 23 when driven by the motor unit 32. The second blade 26 may be a fluid lifting blade in the sense that it is arranged to make ingredients in contact with the second blade 26 flow upward from the bottom 29 of the tank 19, in a direction towards the top of the tank 19, when the second axle 23 is driven by the motor unit 32. Any suitable numbers of fluid lifting blades like the second blade 26 may be connected to the second axle 23, such as four blades, as shown in the illustrated example.

A rotor 51 is arranged at the bottom 29 of the tank 19. The rotor 51 is via an axle 54 connected to a rotor engine 53 that, when activated, drives the axle 54 so that the rotor 51 rotates in a rotational direction R3. The axle 54 of the rotor 51 extends along and is rotatable about a second rotational axis A2 of the mixer unit 1. The two axes A1 and A2 are preferably aligned with each other. A stator 52 is arranged around the radial periphery of the rotor 51. An actuator 56 is arranged to move the stator 52 in a direction D that is parallel to the axis of rotation A2 of the rotor 51. The actuator 56 can set the stator 52 in a lowermost position where it surrounds the radial periphery (circumference) of the rotor 51. The stator 52 can then, by the actuator 56, be moved to an uppermost position where it is lifted such that it does not surround the radial periphery of the rotor 51. The stator 52 has openings where it surrounds the circumference of the rotor 51, thereby allowing ingredients to be pushed through the stator when the stator 52 in an a position where it surrounds all of or some of the rotor 51.

The rotor 51, the stator 52 and the actuator 56 form a rotor-stator arrangement 50 that allows a shear that ingredients are subjected to, by the rotor 51 and the stator 52, to be varied when the rotor 51 rotates. In detail, when the stator 52 is in its lowermost position (closest to the bottom 29 of the tank 19), ingredients inside the tank 19 are by the rotation of the rotor 51 drawn towards the upper side of the rotor 51. The ingredients are then forced outwards in a radial direction of the rotor 51, through the holes in the stator 52 that surround the circumference of the rotor 51.

When the stator 52 is in its uppermost position (farthest away from the bottom 29 of the tank 19), ingredients inside the tank 19 are by the rotation of the rotor 51 drawn towards the upper side of the rotor 51. The ingredients are still forced outwards in a radial direction of the rotor 51, but without passing through the holes in the stator 52 since the stator 52 does not surround the circumference of the rotor 51. The stator 52 can be positioned at any location between its lowermost position and its uppermost position, which will vary the amount of ingredients that pass through the stator 52. The more ingredients that pass though the stator 52, the higher the shear will be. Thus, due to the actuator 56 and the movable stator 52 it is possible to vary a shear that is provided by the rotor 51 and the stator 52 during mixing of any ingredient inside the mixer unit 1.

A control unit 60 is configured to generate signals S1, S2, Sn to control the operation of the mixer unit 1. Some examples of controls signals include signals for opening and closing the valves 41-45 and 31 to thereby let in ingredients respectively empty the mixer unit 1, signals for controlling the rotation of any of the axles 22, 23 and 54 to thereby control agitation and shear applied on ingredients inside the mixer unit 1, and signals for controlling the actuator 56 and thereby the shear that is applied on ingredients in dependence of the location of the stator 52.

The control unit 60 may comprise a CPU (central processing unit) and an MMI (Man Machine Interface), which are configured so that the mixer unit 1 may be controlled and so that information may be presented to an operator or user about the operation of the mixer unit 1. The MMI may, e.g., comprise one or more of a display, a touch screen, a mouse, a keyboard, a track pad, buttons, sliders, switches and knobs, allowing data and control instructions to be inputted by the operator.

The control unit 60 may be implemented by hardware components, or a combination of hardware components and software instructions. The software instructions may be executed by a processor in conjunction with an electronic memory in the control unit 60. The software instructions may be supplied to the control unit 60 on a computer-readable medium, which may be a tangible (non-transitory) product (e.g. magnetic medium, optical disk, read-only memory, flash memory, etc.) or a propagating signal. In one embodiment, the control unit 60 is a PLC. It should understood that the control unit 60 may also be configured to control other functions of the mixer unit 1 than those described herein. In combination, the mixer unit 1 and the control unit 60 are configured to, i.e. are operable to, perform the method for producing mayonnaise as described below.

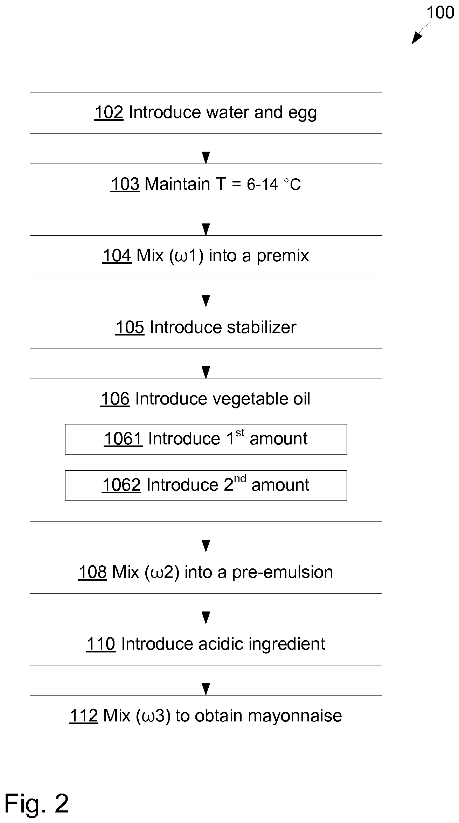

The described mixer unit 1 is one example of mixer unit that may be used for performing a method for producing mayonnaise in a mixer unit, such as the method illustrated by Fig. 2. Another example of a mixer unit that may be used for performing the method described herein is the mixer unit sold by Tetra Pak® under the name "Tetra Pak® High Shear Mixer".

With refence to Fig. 2, the method 100 for producing mayonnaise in a mixer unit is described. The method may be performed by, for example, the mixer unit 1 described in connection with Fig. 1, a Tetra Pak® High Shear Mixer, or by a mixer similar to these mixers.

The method comprises introducing 102 water 11 and egg ingredient 12 into the mixer unit 1. The water 11 is typically fresh water and the egg ingredient 12 may be any combination of liquid egg yolks, dried egg yolks, the liquid part of whole eggs and the dried liquid parts of whole eggs. The introduction 102 is accomplished by, for example, pumping in the ingredients into the mixer unit 1, or by creating underpressure in the mixer unit 1 so that the water 11 and egg ingredient 12 enter the tank 19. Introduction of other ingredients into the mixer unit 1, as described below, may per se be accomplished in a similar manner.

The temperature of the ingredients inside the mixer unit 1 is maintained 103 within a temperature interval of 6-15 °C. This is accomplished by supplying cool water through the cooling jacket 21, with a flow rate and a temperature that enables the maintenance 103 of the temperature. Preferably, all ingredients that are introduced into the mixer unit 1 have, at the time of their respective introduction, a temperature within the same temperature interval of 6-15 °C.

The water 11 and the egg ingredient 12 are mixed 104 into a premix by running the mixer unit 1 at a first operational speed ω1. Herein, an "operational speed" refers to a rotational speed of the rotor 51. Thus the mixing 104 may be accomplished by rotating the rotor 51 at a first rotational speed. A "premix" is the combination of water 11 and the egg ingredient 12 that form a uniform mixture when properly mixed.

Optionally, a stabilizer ingredient 15 is introduced 105 into the mixer unit 1. The introduction of the stabilizer ingredient 15 may be done prior the content inside the mixer unit 1 is mixed into an emulsion in step 106 (see below). The stabilizer ingredient 15 may be introduced into the mixer unit in its dry form, i.e. without premixing the stabilizer ingredient 15 with a liquid before it is introduced into the mixer unit 1. Alternatively, the stabilizer ingredient is dispersed in a small amount of vegetable oil prior to its introduction into the mixer unit 1. Examples of stabilizer ingredients include modified starches combined with hydrocolloids such as xanthan gum, guar gum or locust bean gum. Stabilizer ingredient is used in particular when there is a need for water binding ingredients to create a desired viscosity and texture of the mayonnaise, for example when the finished mayonnaise has a relatively lower fat content.

Vegetable oil 13 is introduced 106 into the mixer unit 1 by such an amount that a final fat content of the produced mayonnaise is 65-85 wt%. The final fat content of the produced mayonnaise may in one embodiment be within the range of 78-85 wt%. Basically, the amount of vegetable oil to introduce is based on the recipe (list of ingredients) for the mayonnaise. The "final fat connect" means that account is taken to any ingredient that is introduced both before and after the vegetable oil has been introduced, i.e. vegetable oil may have a wt% that at this stage of introduction 106 is higher than stipulated by the recipe, but will be lowered if further ingredients are added. Generally only relatively small amounts of ingredients, if any, are introduced after the vegetable oil has been introduced.

Herein, wt% means percentage by weight. For example, 85 wt% vegetable oil means that 85% of the weight of the mayonnaise (the total weight of the finished product) constitutes vegetable oil. The vegetable oil may be introduced at a flow rate of at least 3 liters/second into the mixer unit 1. Alternatively, the vegetable oil may be introduced into the mixer unit 1 at a flow rate of at least 3 to 10 liters/second.

Examples of vegetable oil includes rapeseed oil, sunflower seed oil, soybean oil, and mixes thereof. Olive oil may also be used, alone or in combination with other vegetable oils.

The premix and the vegetable oil are mixed 108 into a pre-emulsion by running the mixer unit 1 at a second operational speed ω2 of the mixer unit 1. The pre-emulsion is an emulsion where the otherwise immiscible premix and vegetable oil has formed a stable mixture. The second operational speed ω2 may be same as the first operational speed ω1. However, the first operational speed ω1 may, to reduce splashing inside the mixer unit 1, be lower than the second operational speed ω2. Next the pre-emulsion is mixed 112 into mayonnaise at a third operational speed ω3 of the mixer unit 1. Basically, the difference between the pre-emulsion and the mayonnaise lies in properties that depends on mixing, such as droplet size and texture, where mayonnaise has the properties that are desired for the finished product.

The introducing 106 of vegetable oil may comprise introducing 1061 a first amount of the vegetable oil when the mixer unit 1 operates at a fourth operational speed ω4, and introducing 1062 a second amount of the vegetable oil when the mixer unit operates at the second operational speed ω2. The first amount is introduced before the second amount. The first amount of vegetable oil may constitute less than 50% of the total amount of vegetable oil that is introduced into the mixer unit. The fourth operational speed ω4 may be at least 33% lower than the second operational speed ω2. The fourth operational speed ω4 may be the same speed as the first operational speed ω1, i.e. the first amount of vegetable oil may be mixed at the same operational speed as the premix.

The second operational speed ω2 may be at least 20% higher than the first operational speed ω1. The third operational speed ω3 may be at least 25% higher than the second operational speed ω2. The second operational speed ω2 may provide a peripheral speed of the rotor 51 in the range of 11-19 m/s. The third operational speed may provide a peripheral speed of the rotor 51 in the range of 16-24 m/s. Even though these ranges of peripheral speeds are overlapping, they should be selected so that the third operational speed ω3 is at least 25% higher than the second operational speed ω2. The peripheral speed of the rotor 51 is typically proportional to the operational speed of the mixer unit 1. In fact, the operational speed of the mixer unit 1 may be defined as the peripheral speed of the rotor 51. This means that, if the peripheral speed of the rotor 51 is 19 m/s for the second operational speed ω2, then the peripheral speed of the rotor 51 should be at least 19 + 25% * 19 = 1,25 * 19 = 23,75 m/s for the third operational speed ω3. The peripheral speed of the rotor 51 may be calculated as the tangential speed of an outermost part (the part most distant from axis A2) of the rotor 51.

At any stage before the mayonnaise is obtained, an acidic ingredient 14 may be introduced 110 into the mixer unit 1 so that the acidic ingredient 14 will become properly mixed into the obtained mayonnaise. The acidic ingredient 14 may, for example, be introduced into the pre-emulsion so that it is mixed with the other ingredients and thereby form part of the mayonnaise. Optionally, the acidic ingredient 14 is introduced into the mixer unit 1 at an earlier stage, such as together with the water 11 and the egg ingredient 12, together with the vegetable oil, or simultaneous with the introduction of any of the other ingredients. Examples of acidic ingredient are vinegar and lemon juice. Mustard and other spices may also be introduced into the mixer unit 1.

Generally, the mixing 104, 108, 112 is performed without any interruption, i.e. the mixer unit 1 must not be stopped in between the mixing steps. The mixing at step 112 is generally performed at a higher (third) operational speed ω3 than the (second) operational speed ω2 at step 108. The mixing at step 108 may also be performed at a higher (second) operational speed ω2 than the (first) operational speed ω1 at step 104. During the mixing 104, 108, 112 at the operational speeds, the various ingredients are introduced 102, 105, 106, 110 into the mixer unit 1.

During the mixing 104, 108, 112 the double shaft agitator 20 circulates a volume of fluid (ingredients) inside the tank 19 that is at least 30% larger than a volume of fluid that passes through a peripheral area A (see Fig. 1) that surrounds the rotor 52, to thereby avoid local circulation of fluid around the rotor 51. The peripheral area A may be defined as the circumference of the rotor 51 multiplied with the average height of the rotor 51. The area A has the same center as the rotor 51.

The ingredients inside the mixer unit 1 are subjected to shear during the mixing 104, 108, 112. The shear may be determined by using conventional principles for determining shear stress in non-Newtonian fluids. The mixer unit 1 is configured to operate the actuator so that the stator 52 is moved in the direction D that is parallel to the axis of rotation A2 of the rotor 51, to thereby vary a shear that is provided by the rotor 51 and the stator 52 during the mixing 104, 108, 112. Generally, when the stator 52 is moved to its bottom position the applied shear is at its maximum. When the stator 52 is moved to its uppermost position the applied shear is at its minimum.

The mixing 108 at the second operational speed ω2 of the premix and the vegetable oil into a pre-emulsion may be performed with the stator 52 in a first position that provides a first shear, while the mixing 112 at the third operational speed ω3 to obtain mayonnaise is performed with the stator 52 in a second position that provides a second shear that is higher than the first shear. In other words, the stator 52 may be moved to its uppermost position during the mixing 108 at the second operational speed ω2, and to its lowermost position during the mixing 112 at the third operational speed ω3. The second shear is at least 50% higher than the first shear.

The mayonnaise is produced, i.e. the method 100 may be performed, without recirculating any content of the mixer unit 1. That no circulation takes place means that no ingredients are taken out from the mixer unit 1 and returned back into the mixer unit 1 when the method 100 is performed.

An operational speed may have the form of an absolute value, or may be the mean value of the operational speed during a period of time for which the mixer unit 1 is run at the operational speed when performing one of the mixing operations 104, 108, 112.

Exactly which combination of operational speeds (tangential speeds of the rotor 51), mixing times as well as position of the stator 52 at the different operational speeds that are most suitable for a specific mayonnaise recipe (combination of ingredients) may be empirically determined based on which texture and appearance is desired for the produced mayonnaise. Such times, speeds and stator positions depend on the ingredients and may be efficiently adapted so that a number of different mayonnaise types may be produced by one single mixer unit like the mixer unit 1 of Fig. 1.

From the description above follows that, although various embodiments of the invention have been described and shown, the invention is not restricted thereto, but may also be embodied in other ways within the scope of the subject-matter defined in the following claims.

## Claims

1. A method for producing mayonnaise in a mixer unit (1), the method comprising
introducing (102) water (11) and egg ingredient (12) into the mixer unit (1),
mixing (104), at a first operational speed (ω1) of the mixer unit (1), the water and the egg ingredient into a premix,
introducing (106) vegetable oil (13) into the mixer unit (1), to such an amount that a final fat content of the produced mayonnaise is 65-85 wt%,
mixing (108), at a second operational speed (ω2) of the mixer unit (1), the premix and the vegetable oil into a pre-emulsion, and
mixing (112), at a third operational speed (ω3) of the mixer unit (1), the pre-emulsion to thereby obtain mayonnaise, and
introducing (110), at any stage before the mayonnaise is obtained, an acidic ingredient (14) into the mixer unit (1) so that the acidic ingredient (14) is mixed into the obtained mayonnaise.

2. The method for producing mayonnaise according to claim 1, wherein the second operational speed (ω2) is at least 20% higher than the first operational speed (ω1).

3. The method for producing mayonnaise according to claim 1 or 2, wherein the third operational speed (ω3) is at least 25% higher than the second operational speed (ω2).

4. The method for producing mayonnaise according to any one of claims 1 - 3, wherein the introducing (106) of vegetable oil comprises
introducing (1061) a first amount of the vegetable oil when the mixer unit operates at a fourth operational speed (ω4), wherein the fourth operational speed (ω4) is at least 33% lower than the second operational speed (ω2), and
introducing (1062) a second amount of the vegetable oil when the mixer unit operates at the second operational speed (ω2).

5. The method for producing mayonnaise according to claim 4, wherein the first amount of vegetable oil constitutes less than 50% of the total amount of vegetable oil that is introduced into the mixer unit (1).

6. The method for producing mayonnaise according to any one of claims 1 - 5, wherein the mixer unit (1) comprises a tank (19), and a rotor (51) and a stator (52) that are arranged at a bottom (29) of the tank (19) to provide the mixing (104, 108, 112).

7. The method for producing mayonnaise according to claim 6, wherein the mixer unit (1) comprises an actuator (53) for moving the stator (52) in a direction (D) that is parallel to an axis of rotation (A2) of the rotor (51) to thereby vary a shear that is provided by the rotor (51) and the stator (52) during the mixing (104, 108, 112).

8. The method for producing mayonnaise according to claim 7, wherein
the mixing (108) of the premix and the vegetable oil into a pre-emulsion is performed with the stator (52) in a first position that provides a first shear, and
the mixing (112) to obtain mayonnaise is performed with the stator (52) in a second position that provides a second shear that is higher than the first shear.

9. The method for producing mayonnaise according to claim 8, wherein the second shear is at least 50% higher than the first shear.

10. The method for producing mayonnaise according to any one of claims 6 - 9, wherein
the second operational speed (ω2) provides a peripheral speed of the rotor (51) in the range of 11-19 m/s, and
the third operational speed (ω3) provides a peripheral speed of the rotor (51) in the range of 16-24 m/s, said peripheral speeds being selected so that the third operational speed (ω3) is at least 25% higher than the second operational speed (ω2).

11. The method for producing mayonnaise according to any one of claims 6 - 10, wherein the mixer unit (1) comprises a double shaft agitator (20) that is arranged to circulate a volume of fluid inside that tank (19) that is at least 30% larger than a volume of fluid that passes through a peripheral area (A) that surrounds the rotor (52), to thereby avoid local circulation of fluid around the rotor (52).

12. The method for producing mayonnaise according to any one of claims 1 - 11, wherein the mixer unit (1) comprises a cooling jacket (21), the method comprising, during the mixing (104, 108, 112), maintaining (103) the temperature of ingredients that are introduced into the mixer unit (1) within an interval of 6-15 °C.

13. The method for producing mayonnaise according to any one of claims 1 - 12, wherein the mayonnaise is produced without recirculating any content of the mixer unit (1), out from the mixer unit (1) and back into the mixer unit (1).

14. The method for producing mayonnaise according to any one of claims 1 - 13, wherein the introducing (106) of vegetable oil (13) comprises introducing the vegetable oil at a flow rate of at least 3 liters/second into the mixer unit (1).

15. A mixing unit (1) and a control unit (60) operable to perform the method for producing mayonnaise according to any one of claims 1 - 14.
